# EUROPÄISCHE PATENTANMELDUNG

(11) **EP 0 544 645 A2**
(43) Veröffentlichungstag der Anmeldung: **02.06.1993**
(21) Anmeldenummer: 93102612.4
(22) Anmeldetag: 19.02.1993
(51) Int. Cl.: B30B 5/06, B27N 3/24, B29C 67/14

(54) **Verfahren und Vorrichtung zum Schmelzimprägnieren von Langfaser-Glasmatten-Thermoplasten und zum Verdichten von Bahnen aus gestreutem Haufwerk thermoplastischer Granulate mit Schütthöhe/Enddicke-Verhältnissen 1,3**

(30) Priorität: 23.01.1993 DE 4301844
(71) Anmelder: Held, Kurt, D-78647 Trossingen (DE)
(72) Erfinder: Held, Kurt, D-78647 Trossingen (DE)

(57) **Zusammenfassung**

Die Erfindung betrifft besondere Bauformen von Doppelbandpressen, die in besonderer Weise geeignet sind zur Schmelzimprägnierung von Langfaser-Glasmatten mit Thermoplasten und zur Verpressung von gestreutem Haufwerk aus Thermoplasten zu endlosen Bahnen. Diese Pressen haben als besondere Merkmale zum einen eine keilförmige Einlaufzone, in der das einlaufende Material unter auf verschidene Weise kontinuierlich gesteigertem Druck auf seine endgültige Dicke gebracht wird, zum anderen Mittel zur seitlichen Abdichtung der Reaktionszone, mit denen ein Ausfliessen des Materials verhindert und eine gleichmässige Qualität der Bahnen über die gesamte Breite erreicht wird.

## Beschreibung

Es ist bekannt, Glas-, Kohlefaser-, Stein- oder Mineralwollefasern oder auch orientierte Fasern aus organischen Duroplasten mit Thermoplastschmelzen zu tränken, um daraus gewonnene meist plattenförmige Halbzeuge in Formpresswerkzeugen zu vielgestaltigen Strukturteilen z. B. für leichte Fahrzeuge umzuformen. So hergestellte Halbzeuge sind unter der Bezeichnung Glasmatten-Thermoplaste (GMT) in der Kunststofftechnik bekanntgeworden.

Weiter ist es bekannt, mit Streuvorrichtungen geschüttetes Haufwerk aus Granulaten meist hochgefüllter thermoplastischer Kunststoffe wie z. B. Ethylvinylazetat oder Polyvinylchlorid in Doppelbandpressen aufzuschmelzen und zu Fussbodenbelägen oder Dachbahnen zu verdichten. Der Stand der Technik für diese Produkte ist in EP 0 046 526 beschrieben.

Das erfindungsgemässe Verfahren und die erfindungsgemässe Vorrichtung wird im Folgenden am Beispiel GMT beschrieben, ist jedoch darauf nicht beschränkt. Auch andere Werkstoffe mit einer Bindematrix aus thermoplastischen Polymeren oder aus thermoplastische Phasen durchlaufenden Duromeren oder Duromeren-Füllstoffgemischen wie harnstoffbeleimten Holzspänen zur Herstellung von Spanplatten sollen durch die Erfindung abgedeckt sein, soweit deren Schütthöhe/Enddicke-Verhältnis vor dem Einlauf in den Spalt zwischen den Einlauftrommeln der erfindungsgemäss ausgebildeten Doppelbandpresse den Wert 1,3 überschreitet und das Endprodukt weitestgehend lufteinschlussfrei ausfallen soll.

Bei der Darstellung der innigen Mischung aus thermoplastischen Polymeren und Fasern für GMT kommt es darauf an, die Faserlänge und -lage im Imprägnierprozess einerseits voll zu erhalten, andererseits für vollständige Benetzung der Oberfläche jeder Einzelfaser durch Schmelze zu sorgen.

Der Stand der Technik ist z. B. durch USPat 95 59 56 und durch DP 2312 816 beschrieben. Dort wird zur Erzielung auch oberflächlich völlig imprägnierter Glasfaser vorgeschlagen, über die Einlauftrommeln der Doppelbandpresse zur kontinuierlichen Imprägnierung der Glasmatten mit Thermoplastschmelze Oberflächenfolien aus dem gleichen Thermoplast zusammenzuführen, oder aber Schmelzefilme auf die Pressbänder abzulegen und die Armierungsfaser als bahnförmiges Vlies zwischen die Schmelzefilme zu geben.

In der Reaktionszone der Doppelbandpresse werden diese Thermoplastfolien sowie die Glasmatten und der z. B. durch Extrudieren hergestellte Schmelzefilm auf Temperaturen aufgewärmt und unter Drücken verdichtet, die zu den für die Weiterverarbeitung erforderlichen Eigenschaften führen.

Bekannter und mit dem Fortschritt der Verarbeitungstechnik zunehmend störenderer Nachteil des Standes der Technik sind die Herstellkosten der Deckfolien in einem vorgeschalteten Prozess sowie die durch ihre Zufuhr in die Reaktionszone komplizierte Maschine. Nachteilig ist auch die zweimalige thermische Beanspruchung des Folienanteils der Polymermatrix.

Ein weiter Nachteil nach dem obigen Stand der Technik hergestellter GMT ist der nennenswerte Volumenanteil beim Imprägnieren eingeschlossener Luft, die die gleichmässige Erwärmung der weiterzuverarbeitenden Zuschnitte im Umluftofen durch Hohlraumbildung und Aufquellen behindert.

Angestrebt werden aus diesen Gründen GMT-Halbzeuge, deren Wichte bis zu 99 % der theoretischen Werte geht oder diese bis auf 0,1 % erreicht, die völlig lufteinschlussfrei jede einzelne Armierungsfaser in Harzmatrix eingeschlossen zeigen und die nur ein Minimum an Faserbruch aufweisen.

Weiter ist es erwünscht, anteilig höhere Faserkonzentration in den Randschichten zu erzeugen, um die Fliesseigenschaften beim Verarbeiten zu Formteilen und die Steifigkeit aus GMT hergestellter Formteile günstig zu beeinflussen.

Zur Darstellung solcher GMT ist in DEP 33 47 877 vorgeschlagen worden, Faserarmierungen die Form von Geweben zu geben, die Harzmatrix ausschliesslich als feste Folie zuzuführen und dieses Paket innerhalb der Reaktionszone aufzuschmelzen. Dabei sollen die seitlichen Begrenzungen der Reaktionszone durch kalibrierende Dichtdrähte druckfest verschlossen dargestellt sein, während das noch feste Rohmaterialpaket die Einlaufseite, bereits wieder erstarrtes GMT die Auslaufseite druckdicht hält.

Kostspieliger Nachteil dieser bekannten Anordnung, die im übrigen GMT mit höchsten Wichten liefert, ist der zweimalige thermische Aufschluss der Harzmatrix, neben der damit einhergehenden zweimaligen thermischen Belastung des Polymeren, aus dem die Matrix besteht. Auch die Länge der Doppelbandpresse im Verhältnis zum GMT-Ausstoss je Zeiteinheit wird wegen der notwendigen Zeit zum Aufheizen der Ausgangsstoffe auf Schmelztemperatur grösser, der Prozess deshalb teurer.

Das neuentwickelte Verfahren und die dazu verwendete Vorrichtung vermeiden beides. Die Imprägnierung erfolgt in bekannter Weise in einer Doppelbandpresse, die jedoch erfindungsgemäss mit einer konischen Einlaufzone ausgerüstet und mit Seitendichtung entlang der Bandkanten so ausgeführt ist, dass der auf die Pressbandrückseiten wirkende Druck entsprechend der zunehmenden Verdichtung im Verlauf der keilförmigen Einlaufzone der Doppelbandpresse stetig steigen kann, ohne dass seitlich entlang der Pressbandkanten Harzschmelze-Fasergemisch ausbrechen und den Produktionsprozess dadurch zusammenbrechen lassen kann.

Die Aufgabe wird durch die in Patentanspruch 1 aufgeführten Merkmale gelöst. Erreicht wird vor allem, dass je nach Länge der keilförmigen Vorverdichtungszone in dem daran anschliessenden, ausschliesslich isobar gestützten Endverdichtungsteil der Reaktionszone so hohe Drücke erreicht werden, dass sich Wichten bis und > 99 % der theoretisch möglichen Werte der jeweiligen GMT ergeben.

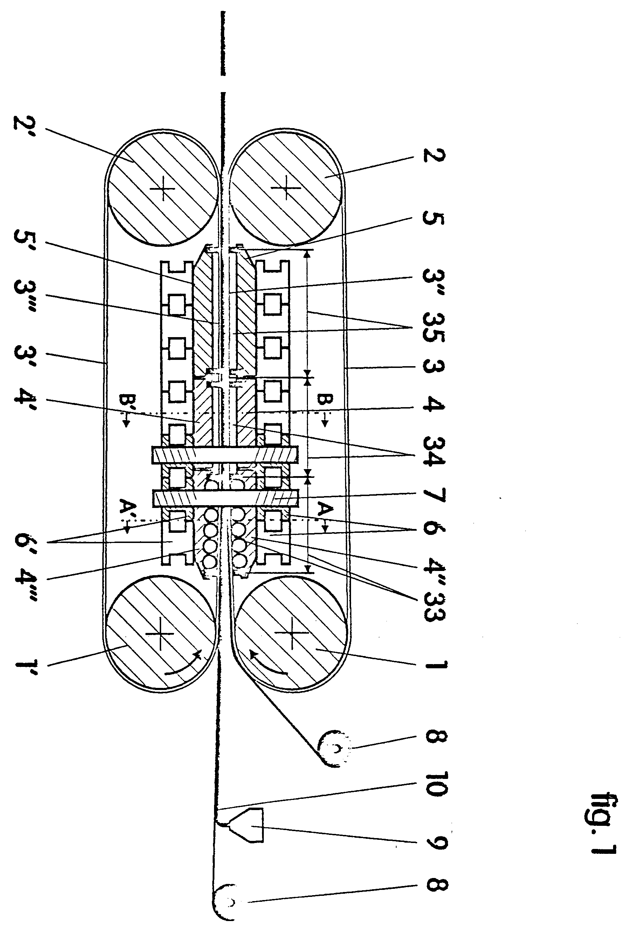

Das erfindungsgemässe Verfahren schlägt vor, einer nach Fig. 1 ausgebildeten Doppelbandpresse in Bahnform vorliegende Armierungsfaser in einer oder mehreren Bahnen zuzuführen und zwischen die Bahnen einen oder mehrere Schmelzefilme so abzulegen, dass der in einem Schneckenextruder über eine Breitschlitzdüse geformte, auf die Heiz- und Kühlleistung der Doppelbandpresse, d. h. auf deren Bandgeschwindigkeit abgestimmte Schmelzestrom GMT mit dem gewünschten Glasgehalt ergibt.

Dazu wird weiter vorgeschlagen, die in die Reaktionszone der Presse einlaufenden Stoffbahnen in der keilförmigen Vordichtungs- und in einem Teil der parallel isobar gestützten Nachverdichtungszone auf Temperaturen aufzuheizen, die für die Benetzung jeder einzelnen Faser optimale Schmelzeviskositäten ergeben.

Überraschend haben Imprägnierversuche gezeigt, dass bei durch hohe Schmelzetemperaturen reduzierten Schmelzeviskositäten die Resorption von im HarzschmelzeFasergemisch eingeschlossener Luft druckproportional ansteigt. Je höher also der auf der Schmelze und damit auf der eingeschlossenen Luft wirkende Druck ist, desto mehr Luft kann von der angrenzenden Schmelze resorbiert werden.

Diese Wirkung ist aus zwei Gründen wichtig: nach dem Erstarren des Harzschmelze-Fasergemisches ist eine Desorption resorbierter, urprünglich eingeschlossener Luft nur noch über die Oberflächen der GMT-Platten möglich, ein Vorgang, der über lange Zeiträume von Tagen bis Wochen verläuft und deshalb nicht mehr zu Poren- oder Hohlraumbildung im GMT führen kann.

Eine weitere Folge dieser überraschenden Tatsache ist, dass Lufteinschlüsse, die sich bevorzugt in direkter Nachbarschaft zu den Pressbandoberflächen einstellen, wenn die Nachverdichtungsdrücke in der an die keilförmige Vorverdichtungszone anschliessenden Nachverdichtungszone < 150 N/cm2 sind, bei darüber hinaus steigenden Drücken unter adiabatischer Verdichtung völlig verschwinden, darin enthaltene Armierungsfaser vollkommen benetzend.

Es wird als sicher angesehen, dass die durch adiabatische Erwärmung der eingeschlossenen, sich verdichtenden Luft anfallende Energie zur Erhöhung des Temperaturniveaus der angrenzenden Polymerschmelze und damit zu einer zusätzlichen örtlich erwünschten Viskositätsabsenkung führt, die die vollständige Benetzung der z. B. Glasfaser erleichtert.

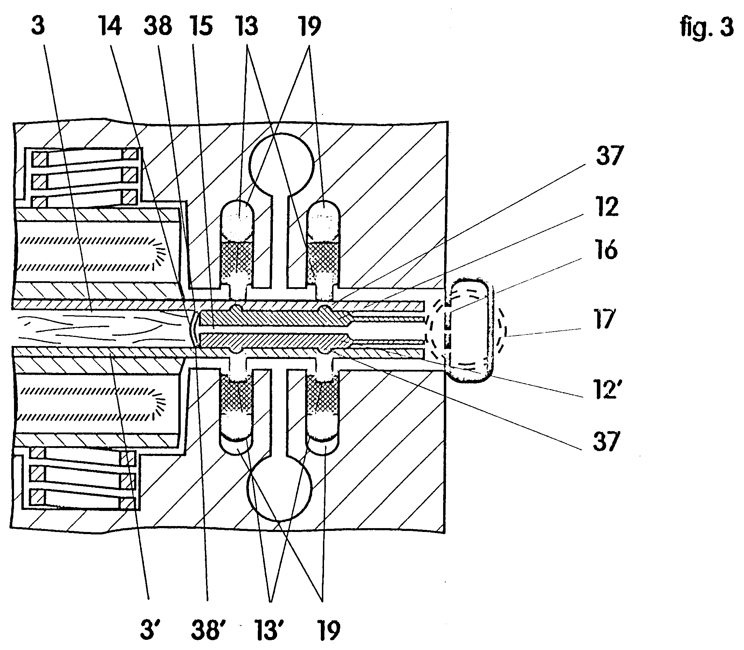

Erfindungsgemäss wird deshalb im weiteren Verlauf der Nachverdichtungszone der Reaktionszoneninhalt in den gekühlten Druckplattenbereich 5, 5' überführt, wo ihm unter aufrechterhaltenem Druck die Wärme durch intensive Kühlung der Bandrückseiten entzogen wird bis auf ein Temperaturniveau, bei dem die feste GMT-Platte an den Auslauftrommeln drucklos entformt werden kann.
Fig. 1 zeigt das Prinzip einer erfindungsgemäss ausgeführten Doppelbandpresse: Über Einlauftrommeln 1 und 1' und Auslauftrommeln 2 und 2' sind Pressbänder 3, 3' geführt, deren sich gegenüberliegende Bandtrums 3'', 3''' zwischen beheizten Druckplatten 4, 4'sowie 4'', 4''' und gekühlten Druckplatten 5, 5' hindurchgeführt sind. Die Druckplattenpaare 4, 4'und 4'', 4''' bzw. 5 und 5' sind in Stützträgern 6, 6' aufgehängt, die über die nur teilweise gezeichneten Gewindespindeln 7 zur tragenden Struktur der Doppelbandpresse zusammengefügt sind.
   Während das Druckplattenpaar 4'', 4''' für isochore, mechanische Pressbandabstützung mit stationär drehbaren Rollen ausgerüstet ist, sind in den Druckplattenpaaren 4, 4' und 5, 5' isobar wirkende Druckkissen z. B. nach DEP 29 53 078 zur Darstellung hoher Drücke > 150 N/cm2 vorgesehen.
   Von Armierungsmaterialrollen 8 werden die in geeigneter Weise, z. B. als Vlies verarbeiteten Armierungsfasern abgewickelt und von den angetriebenen Pressbändern 3, 3' in die Reaktionszone 33, 34, 35 eingezogen. In der Breitschlitzdüse 9 wird der in einem nicht gezeichneten Schneckenextruder aufbereitete Schmelzefilm 10 erzeugt. Die Breitschlitzdüse ist auf die Innenseite der unteren Armierungsfaserbahn 8 gerichtet, auf die sich der extrudierte Schmelzefilm 10 legt.

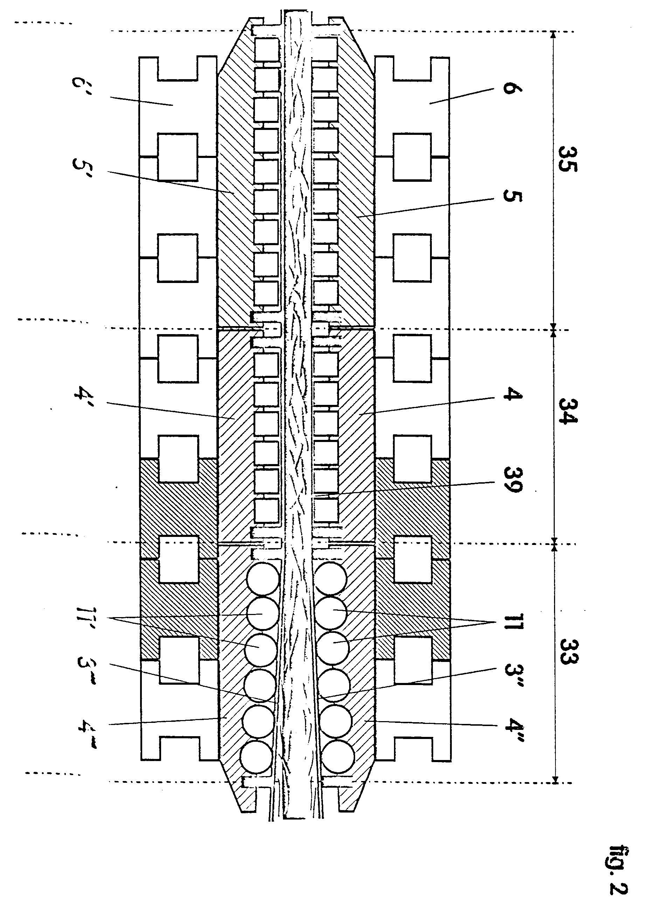

Fig. 2 zeigt in einem Ausschnitt aus Fig. 1 die erfindungsgemäss keilförmig ausgeführte isochore, beheizte Vorverdichtungszone 33 mit den Druckplatten 4'', 4''', die mit stationär drehbaren Stützrollen 11, 11', z. B. nach DEP 31 35 031, die Pressbänder 3, 3' in deren Bereich 3'' - 3''' abstützt zur Aufnahme der durch zunehmende Verdichtung des Reaktionszoneninhalts 39 ansteigenden Druckkräfte in der keilförmigen Vorverdichtungszone 33.
   An die Vorverdichtungszone 33 mit isochorer Abstützung der Pressbänder 3'', 3''' schliesst sich die isobar gestützte, z. B. nach DEO 39 21 364 beheizte oder wahlweise gekühlte Endverdichtungszone 34 an, die in eine ebenfalls isobare, ausschliesslich gekühlte Endverdichtungszone 35 übergeht.
   Der durch zunehmende Verdichtung in der erfindungsgemäss keilförmigen Vorverdichtungszone 33 ansteigende Druck ist grundlegende Voraussetzung dafür, dass in der sich anschliessenden, isobar gestützten Endverdichtungszone 34 trotz ihres schmelzflüssigen Inhalts 39 gegen die offene Einlaufseite der keilförmigen Vorverdichtungszone 33 hin hoher Endverdichtungsdruck aufrecht erhalten werden kann, ohne dass Harzschmelze-Fasergemisch in die keilförmige Vorverdichtungszone 33 zurückfliessen kann.
   Ein solches Zurückfliessen von Harzschmelze-Fasergemisch beim Betrieb einer Doppelbandpresse hat katastrophale Folgen, da auch kleinste Rückströme zu Mengen und Drücken akkumulieren, die die Pressbandabstützung oder die Seitenabdichtung in der Vorverdichtungszone überwinden und kurzfristig zum Zusammenbruch des Prozesses führen.
Fig 3, 5, 7, 9 und 10 zeigen Schnitte entlang der Ebene A - A' in Fig. 1 mit Massnahmen zur Seitenabdichtung der Reaktionszone.

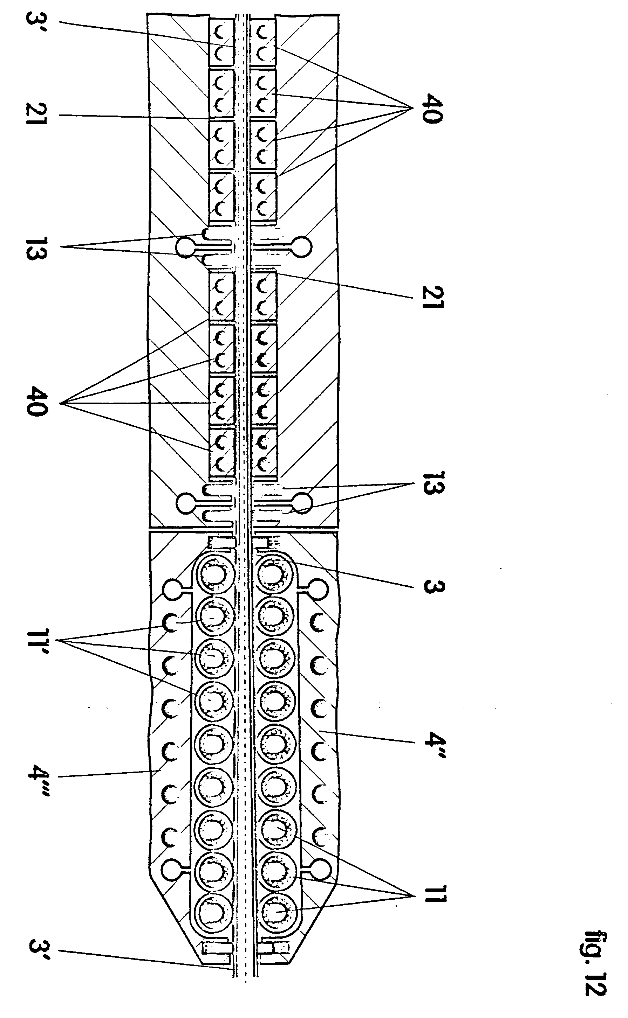

Fig. 11 und 12 zeigen Schnitte entlang der Ebene B - B' in Fig. 2 bzw. C - C' in Fig. 4
Eine Ausführungsform nach Fig. 3 zeigt mitlaufende, kalibrierende Dichtbänder 12 und 12' als Schnitt in der Ebene A - A', Fig. 1, deren Führungswulst 37 in passend geformten Nuten in der Oberfläche der Pressbänder 3, 3' zentriert, mit diesen umlaufen. Da jedoch die Dichtbänder 12, 12' im Bereich der keilförmigen Vorverdichtungszone nicht hermetisch dichten können, ist es notwendig, plastisch verformbare feste Formelemente 14 mitzuführen, die das Schmelzefilm-Fasergemisch am Einfliessen in den sich verjüngenden Zwischendichtungsraum 15 hindern und deren Form ein Dichten unter Anpassung an die abnehmende Reaktionszonenhöhe ergibt.

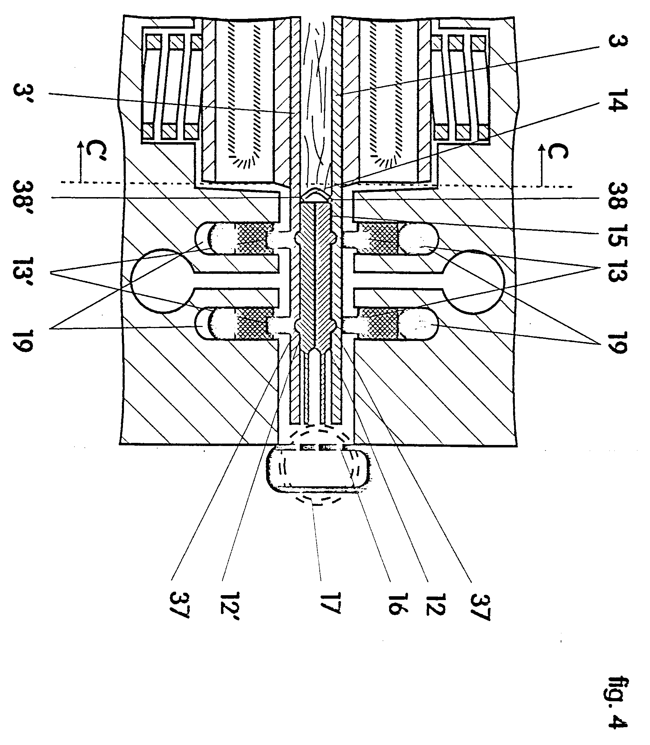

Fig. 4 zeigt in einem Schnitt durch die Ebene B - B' die Geometrie der seitlichen Reaktionszonenabdichtung: Die Dichtbänder 12 und 12' werden von der Anpresskraft der Gleitflächendichtungen 13, 13' zusammengepresst, die hydraulisch durch Druck auf fluides Druckmittel 19 auf Elastomerdichtungen hinter den Gleitdichtungen erzeugt wird. Das Formelement 14 hat sich der geringeren Höhe der Reaktionszone in der Ebene B - B angepasst unter aufrechterhaltener Pressung, d. h. Dichtung gegen Harzschmelze-Fasergemisch bei 38, 38'.

In Fig. 3 bzw. 4 sind die Dichtbänder 12 und 12' mit zum atmosphärenseitigen Reaktionszonenrand hin dünner ausgeführten Kühlfahnen ausgebildet, die intensive Kühlung durch aus Bohrungen 16 austretende Pressluft oder Pressluft-Wassergemisch erlauben, die durch ein Rohr 17 zugeführt wird.

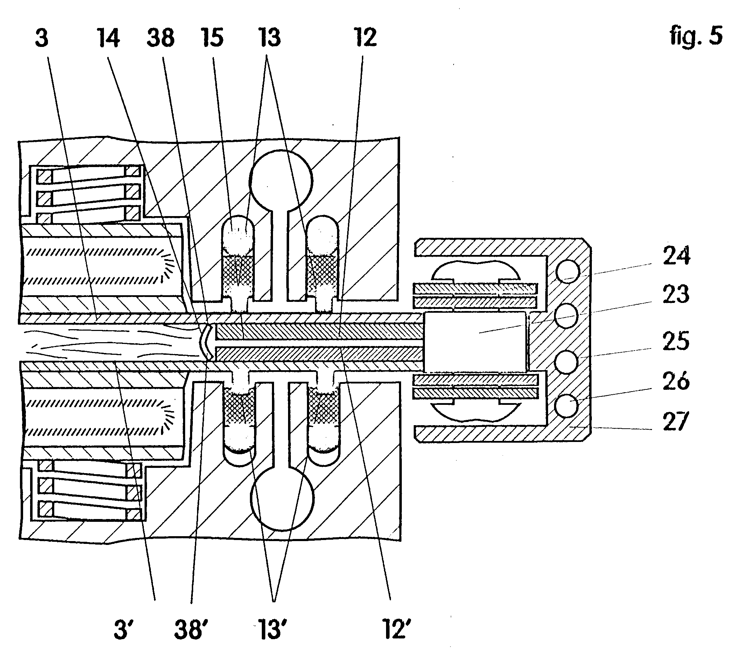

Fig. 5 zeigt, ebenfalls in einem Schnitt entlang der Ebene A - A eine erfindungsgemässe Ausführungsform der Randabdichtung durch am Pressbandumfang 3, 3' mitlaufende kalibrierende Dichtbänder 18 ohne Zentrierwulst 37, die durch die Rollen 23 einer mit halber Pressbandgeschwindigkeit umlaufenden Rollenkette 24 angepresst, auf die Pressbandkanten zentriert und dadurch gekühlt werden, dass sie auf einer ihrerseits mit in Bohrungen 25 umlaufendem Kühlmittel 26 gekühlten Anpressleiste 27 abrollen. Diese Anpressleiste 27 wird von nicht dargestellten Krafterzeugungsmitteln flexibel an die Rollen 23 der Rollenkette 24 angepresst.

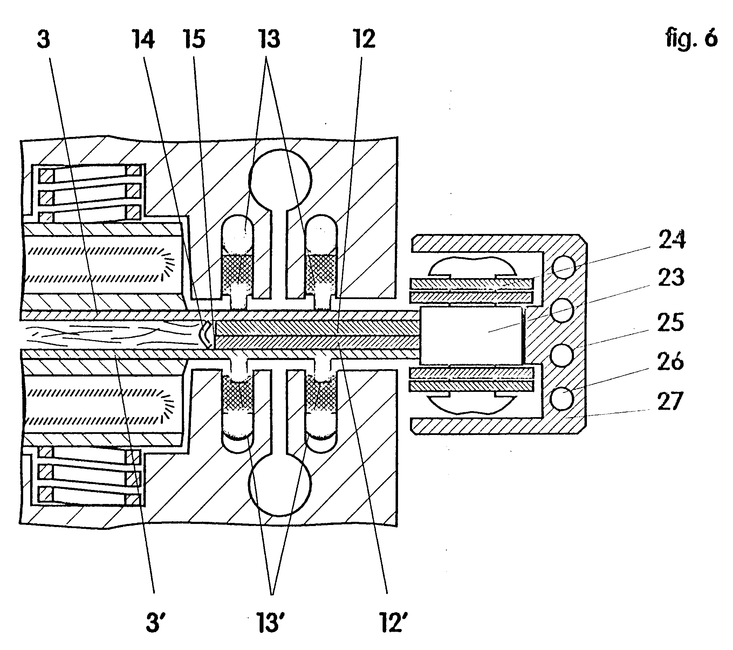

Fig. 6 zeigt in einem Schnitt durch die Ebene B - B' die Geometrie der seitlichen Reaktionszonenabdichtung für die Ausführungsform nach Fig. 5 analog der für Fig. 4 beschriebenen Wirkungsweise.

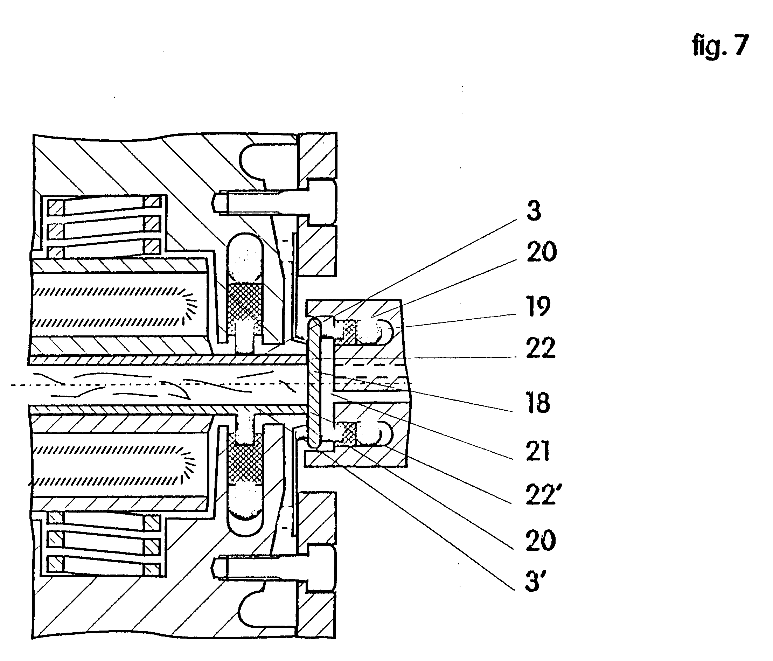

Fig. 7 zeigt als Schnitt entlang der Ebene A - A' eine bevorzugte Form endlos umlaufender, gekühlter Dichtbänder 18, die über die gesamte Länge der Vor- und Nachverdichtungszone 33, 34 und 35 auf die seitliche Kante der Pressbänder 3, 3' angepresst werden durch von flüssigem Druckmittel 19 angepresste Gleitdichtungen 20. Druckmittel 19 wie Kissendruckmittel 21 ist vorzugsweise Wasser oder eine andere, hinsichtlich möglicher Leckmengen problemlos verdunstende Flüssigkeit, die, in entsprechneder Menge umgewälzt, das Dichtband 18 so kalt hält, dass Harzschmelze-Fasermischung im Bereich der Fuge 22 augenblicklich erstarrt und dadurch gegen Schmelzedruck zur Atmosphäre hin dichtet.

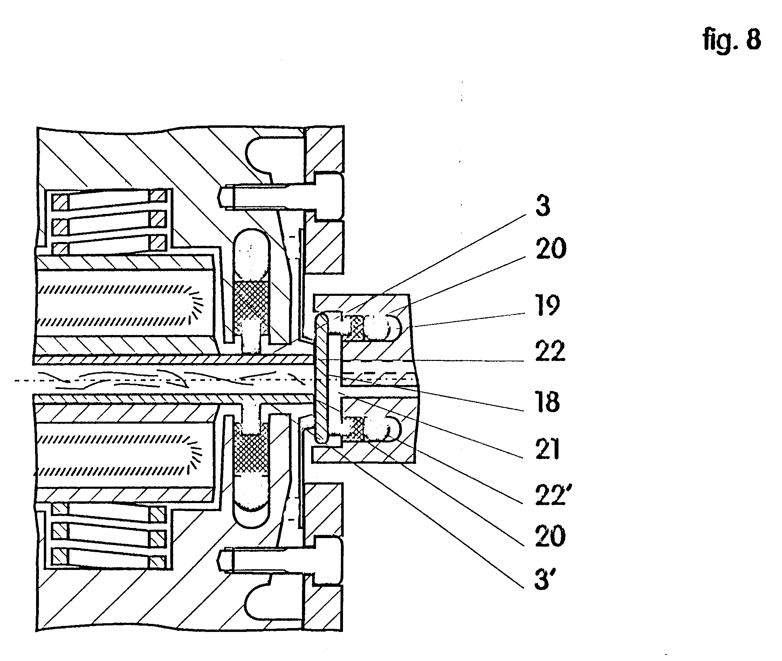

Fig. 8 zeigt in einem Schnitt entlang der Ebene B - B , die Geometrie der seitlichen Reaktionszonenbegrenzung dieser Ausführungsform der Randabdichtung. Die Dichtwirkung ist im Übrigen analog der für Fig. 7 beschriebenen.

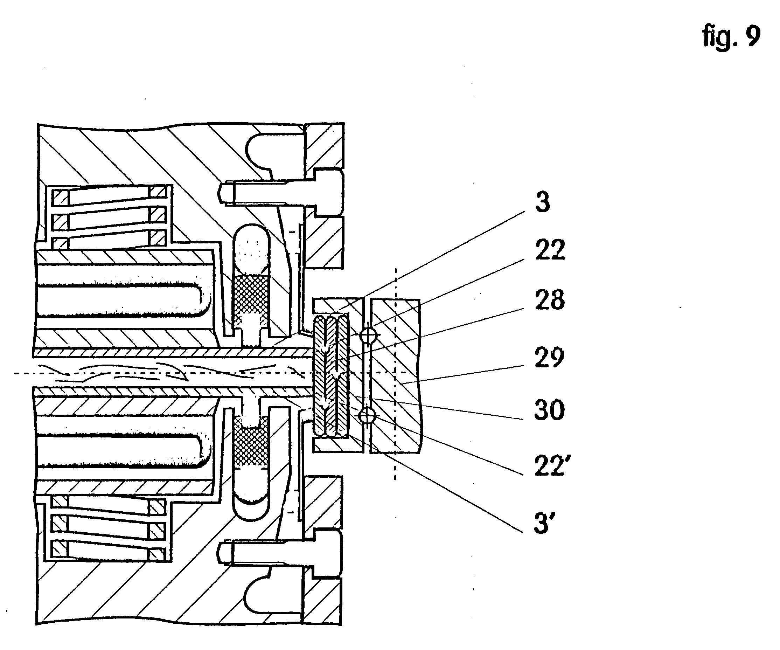

Fig. 9 zeigt einen nach DEP 27 35 142 ausgebildeten, dreilagigen Dichtbandsatz 28, der mit feststehenden, um einen Achsbolzen 29 drehbaren Führungsrollen 30 an die Pressbandkanten 3, 3 angedrückt wird. Hier kann die direkte Kühlung des Dichtbandsatzes entfallen und durch eine indirekte, ausserhalb der Reaktionszone bewirkte Kühlung ersetzt werden, da die Wärmekapazität des Dichtbandsatzes das Erstarren der GMT-Kante und damit die Abdichtung gegen Schmelzedruck zur Atmosphäre hin übernimmt.

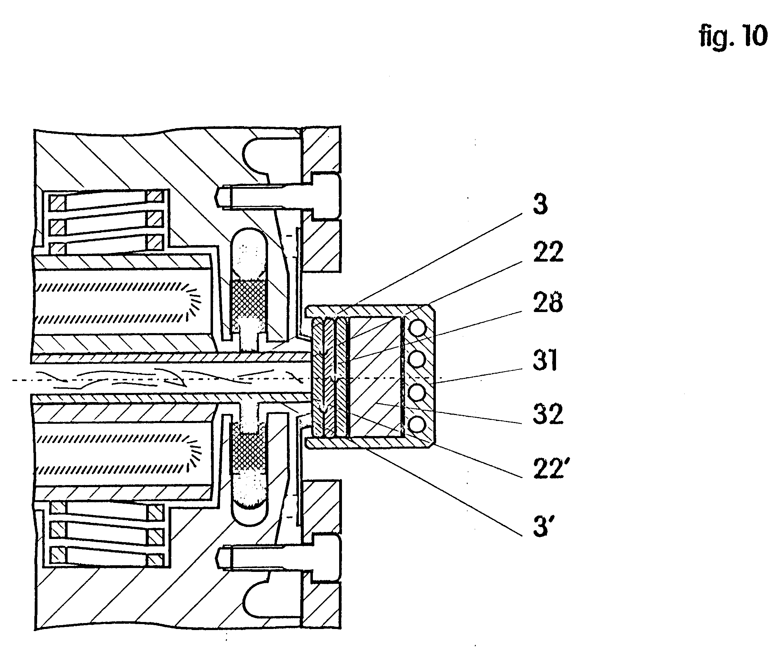

Fig. 10 zeigt einen ebenfalls nach DEP 27 35 142 ausgebildeten dreilagigen Dichtbandsatz 28, der jedoch mit in einer gekühlten Führungsschiene 31 mit halber Pressbandgeschwindigkeit umlaufenden Rollen 32 an die Kanten der Pressbänder 3, 3' angedrückt wird. Hier kann die Wärmekapazität des Dichtbandsatzes 18 und Kühlung der Führungsschiene 31 zu besonders hoher Kühlleistung kombiniert werden. Krafterzeugungsmittel sind wie in Fig. 5 nicht dargestellt, die Kühlwirkung ist im Prinzip gleich.

Allen Dichtbandanordnungen nach Fig 4, 6 und 7 ist eigen, dass sie die Dichtfunktion im Bereich der keilförmigen Vorverdichtungszone in idealer Weise übernehmen: Die Kanten der Pressbänder 3, 3' gleiten auf den Oberflächen der Dichtbänder 18 und der Dichtbandsätze 28 in dem Mass, in dem der keilförmige Verlauf der Vorverdichtungszone die Abnahme des Abstandes zwischen den Pressbändern 3, 3' erzwingt.

Dabei bleibt die Dichtfunktion voll erhalten, da die Fuge 22, 22' auf ihrer vollen Länge kalt bleibt, das Harzschmelze-Fasergemisch deshalb schnell erstarrt und dann selbstdichtend wirkt.

Erfahrungsgemäss steigt die Temperatur vom Bereich der Fuge 22, 22' in Richtung auf den Kern des Harzschmelze-Fasergemisches schnell an, so dass die Dicke der erstarrten Schicht gering bleibt, sie sich also mechanisch unter geringer Kraft verformen lässt, ohne dass dabei die Dichtwirkung leidet.

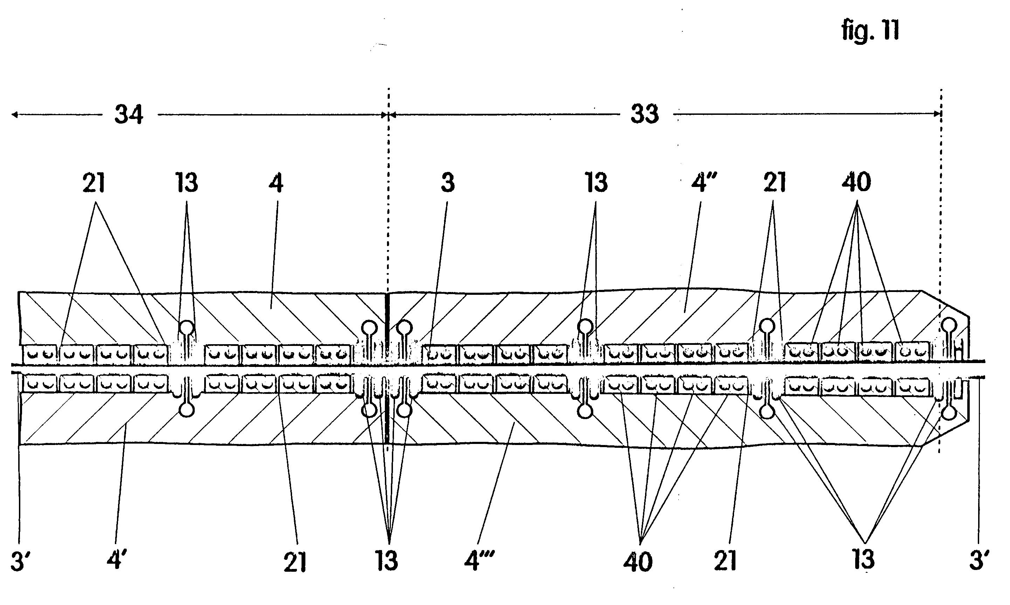

Fig. 11 ind 12 beschreiben erfindungsgemässe Ausgestaltungen der Reaktionszone von Doppelbandpressen, die in einer keilförmigen Vorverdichtungszone mit isochorer, isobarer oder kombiniert isochor/isobarer Pressbandabstützung die Realisierung des erfindungsgemässen Verfahrens zur Herstellung von GMT mit hoher Wichte bis und > 99 % der theoretischen Werte erlaubt.

Nach Fig. 11 wird die für steigende Harzschmelze-Fasergemischdrücke notwendige isobar wirkende Abstützung der Pressbänder 3, 3 durch Druckmittel 19 gefüllte und mit Gleitflächendichtungen 13, 13 realisierte Druckkissen in der Weise ermöglicht, dass mehrere Kissen im Verlauf der Vorverdichtungszone hintereinander mit Druckmittel 19 gestuft höheren Druckes angeordnet sind.

| Legende zu den Zeichnungen | |
|---|---|
| Einlauftrommeln | 1,1' |
| Auslauftrommeln | 2,2' |
| Pressbänder | 3,3' |
| beheizte Druckplatten | 4,4' |
| gekühlte Druckplatten | 5,5' |
| gegenüberliegende Bandtrums | 3'', 3''' |
| Gewindespindeln | 7 |
| Armierungsmaterialrollen | 8 |
| Breitschlitzdüse | 9 |
| Schmelzefilm | 10 |
| Stützrollen | 11,11' |
| beheizte, keilförmige Druckplatten | 4'',4''' |
| kalibrierende Dichtbänder | 12,12' |
| Gleitflächendichtungen | 13,13' |
| Zwischendichtungsraum | 15 |
| Bohrungen | 16 |
| Rohr | 17 |
| gekühlte, umlaufende Dichtbänder | 18 |
| Druckmittel | 19 |
| angepresste Gleitdichtungen | 20 |
| Kissendruckmittel | 21 |
| Fuge | 22 |
| Rollen | 23 |
| Rollenkette | 24 |
| gekühlte Anpressleiste | 27 |
| Kühlmittel | 26 |
| dreilagiger Dichtbandsatz nach DEP 27 35 142 | 28 |
| Achsbolzen | 29 |
| Führungsrolle | 30 |
| Führungsschiene, gekühlt | 31 |
| umlaufende Rollen nach DEP ... | 32 |
| beheizte keilförmige Vorverdichtungszone | 33 |
| beheizte Nachverdichtungszone | 34 |
| gekühlte Nachverdichtungszone | 35 |
| Wärmeleitelemente nach DE0 39 21 364 | 36 |
| Zentrierwulst | 37 |
| Dichtung gegen Harzschmelze-Fasergemisch bei | 38 |
| Dichtung gegen Harzschmelze-Fasergemisch bei | 38' |
| Reaktionszoneninhalt | 39 |

## Patentansprüche

1. Verfahren zur Herstellung
a) hochverdichteter bahnförmiger Gemische aus thermoplastischen Polymeren und vorzugsweise langfaserigen Armierungsfasern aus Glas, Kohle, orientierten, gereckten duroplastische Fasern, Naturfasern oder Späne aus Holz, verholzten Pflanzenteilen u. ä.,
b) aus während der Vernetzung durch Warmezufuhr thermoplastische Phasen durchlaufenden Duromeren als Bindemitteln und Armierungsfasern wie unter a) aufgeführt als Verstärkung
c) hochverdichteter Bahnen aus kontinuierlich gestreutem, körnigem Haufwerk thermoplastischer Polymergranulate oder thermoplastische Phasen durchlaufender Duromere mit oder ohne Zusatz von Fullstoffen, besonders mehrfarbige Granulate für Fussbodenbeläge;
dadurch gekennzeichnet, dass
1) die Verdichtung in einer Doppelbandpresse mit isobarer oder kombiniert isochor/isobar wirkender Pressbandabstützung erfolgt;
2) die Doppelbandpresse eine keilförmige, beheizbare Vorverdichtungszone mit kombiniert isochor/isobarer, nur isobarer oder nur isochorer Pressbandabstüzzung hat;
3) an die Vorverdichtungszone sich eine beheizbare, kühlbare oder wahlweise beheizbare oder kühlbare Endverdichtungszone mit isobarer Pressbandabstützung unmittelbar anschliesst;
4) die seitliche Abdichtung der Reaktionszone der Doppelbandpresse gegen Druck aus dem Reaktionszoneninhalt zwischen den Pressbändern zur Atmosphäre hin durch kalibrierende, mit den Pressbändern in Nuten zentriert umlaufende, über die gesamte Länge der Reaktionszone gekühlte Dichtbänder erfolgt;
5) die seitliche Abdichtung durch umlaufende, über die gesamte Länge der Reaktionszone gekühlte, auf die seitliche Kante der Pressbänder angepresste Dichtbander oder Dichtbandsätze erfolgt;
6) der für die einlaufseitige Abdichtung der Endverdichtungszone notwendige Druck im Schmelze-Fasergemisch erzeugt wird durch den in der konischen Vorverdichtungszone steigenden Widerstand der Armierungsfasern gegen die mit der Verdichtung einhergehende Penetration der Armierungsfasern durch die Schmelze bzw. dadurch, dass die daraus resultierende Reibkraft des Schmelze-Fasergemischkeils gegen die Pressbandoberflächen den Aufbau noch höherer Endverdichtungsdrücke in der Endverdichtungszone erlaubt; und
7) der für die einlaufseitige Abdichtung der Endverdichtungszone notwendige höhere Druck in der Endverdichtungszone bei gestreutem, körnigem Haufwerk erzeugt wird durch den im Verlauf der keilförmigen Vorverdichtungszone steigenden Widerstand des abschmelzenden Haufwerks gegen Verdichtung bzw. dadurch, dass die daraus resultierende Reibkraft des Schmelze-Haufwerkskeiles gegen die Pressbandoberflächen den Aufbau noch höherer Drücke in der Endverdichtungszone erlaubt.

2. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Vorverdichtungszone mit isochorer, mechanischer Bandabstützung durch stationär drehbare Nadelrollen ausgeführt ist, und
die planparallele Endverdichtungszone isobar gestützt und beheizt oder gekühlt oder wahlweise beheiz- oder kühlbar ausgeführt ist, die keilförmige` beheizte Vorverdichtungszone und die beheizte, gekühlte oder wahlweise beheizte oder gekühlte Nachverdichtungszone mit kalibrierenden, mit Zentrierwulsten in Zentriernuten der Pressbänder umlaufenden gekühlten Dicht-bändern und einem plastisch oder elastisch verformbaren, an den Pressbändern und an den Kanten der Dichtbänder abgestützen Formelement ausgerüstet ist.

3. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Vorverdichtungszone mit isochorer, mechanischer Bandabstützung durch stationär drehbare Nadel rollen ausgeführt ist, und
die keilförmige, beheizte Vorverdichtungszone und die beheizte, gekühlte oder wahlweise beheizte oder gekühlte Nachverdichtungszone mit auf die Pressbandkante isobar angepressten, mit diesen mitlaufenden, durch kaltes Druckmittel gekühlten Dichtbändern ausgerüstet ist.

4. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Vorverdichtungszone mit isochorer, mechanischer Bandabstützung durch stationär drehbare Nadel rollen ausgeführt ist, und
die keilförmige, beheizte Vorverdichtungszone und die beheizte, gekühlte oder wahlweise beheizte oder gekühlte Nachverdichtungszone mit auf die Pressbandkante isochor, jedoch flexibel mit Rollenketten über gekühlte Führungsschienen ange-pressten, mit diesen umlaufenden Dichtbandsätzen ausgerüstet ist.

5. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Vorverdichtungszone mit isochorer, mechanischer Bandabstützung durch stationär drehbare Nadel rollen ausgeführt ist, und
die keilförmige, beheizte Vorverdichtungszone und die beheizte, gekühlte oder wahlweise beheizte oder gekühlte Nachverdichtungszone mit auf die Pressbandkante isochor, jedoch flexibel mit feststehenden gekühlten Führungsrollen angepressten mit den Pressbandkanten umlaufenden Dichtbandsätzen ausgerüstet ist.

6. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Einlaufzone isobare Bandabstützung durch mehrere getrennte, auf die Pressbandrückseiten wirkende Druckkissen dargestellt wird, die mit fluidem Druckmittel zur Nachverdichtungszone hin steigend höheren Druckes gefüllt sind,
und die
die keilförmige, beheizte Vorverdichtungszone und die beheizte, gekühlte oder wahlweise beheizte oder gekühlte Nachverdichtungszone mit auf die Pressbandkante isochor, jedoch flexibel mit Rollenketten über gekühlte Führungsschienen ange-pressten, mit diesen umlaufenden Dichtbandsätzen ausgerüstet ist.

7. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Einlaufzone isobare Bandabstützung durch mehrere getrennte, auf die Pressbandrückseiten wirkende Druckkissen dargestellt wird, die mit fluidem Druckmittel zur Nachverdichtungszone hin steigend höheren Druckes gefüllt sind,
und die
die keilförmige, beheizte Vorverdichtungszone und die beheizte, gekühlte oder wahlweise beheizte oder gekühlte Nachverdichtungszone mit auf die Pressbandkante isochor, jedoch flexibel mit feststehenden gekühlten Führungsrollen angepressten mit den Pressbandkanten umlaufenden Dichtbandsätzen ausgerüstet ist.

8. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Einlaufzone isobare Bandabstützung durch mehrere getrennte, auf die Pressbandrückseiten wirkende Druckkissen dargestellt wird, die mit fluidem Druckmittel zur Nachverdichtungszone hin steigend höheren Druckes gefüllt sind,
und die
die planparallele Endverdichtungszone isobar gestützt und beheizt oder gekühlt oder wahlweise beheiz- oder kühlbar ausgeführt ist, die keilförmige, beheizte Vorverdichtungszone und die beheizte, gekühlte oder wahlweise beheizte oder gekühlte Nachverdichtungszone mit kalibrierenden, mit Zentrierwulsten in Zentriernuten der Pressbänder umlaufenden gekühlten Dicht-bändern und einem plastisch oder elastisch verformbaren, an den Pressbändern und an den Kanten der Dichtbänder abgestützen Formelement ausgerüstet ist.

9. Doppelbandpresse zur Durchführung des Verfahrens nach Anspruch 1 mit über beheizte Einlauf- und beheizte oder gekühlte Auslauftrommeln umlaufenden Pressbändern mit kreisabschnittförmigen oder ähnlichen Zentriernuten parallel zu den Pressbandkanten sowie mit keilförmiger beheizter Einlauf- und planparalleler beheizter und/oder gekühlter Auslaufzone über den auf die Bandrückseiten wirenden Stützrollen bzw. Druckkissen
dadurch gekennzeichnet, dass
die keilförmige Einlaufzone isobare Bandabstützung durch mehrere getrennte, auf die Pressbandrückseiten wirkende Druckkissen dargestellt wird, die mit fluidem Druckmittel zur Nachverdichtungszone hin steigend höheren Druckes gefüllt sind,
und die
die keilförmige, beheizte Vorverdichtungszone und die beheizte, gekühlte oder wahlweise beheizte oder gekühlte Nachverdichtungszone mit auf die Pressbandkante isobar angepressten, mit diesen mitlaufenden, durch kaltes Druckmittel gekühlten Dichtbändern ausgerüstet ist.
